# EUROPEAN PATENT APPLICATION

(11) **EP 2 687 971 A2**
(43) Date of publication of application: **22.01.2014**
(21) Application number: 13176737.8
(22) Date of filing: 16.07.2013
(51) Int. Cl.: G06F 3/0488

(54) **Touch and gesture input-based control method and terminal therefor**

(30) Priority: 16.07.2012 KR 20120077021
(71) Applicant: Samsung Electronics Co., Ltd, Gyeonggi-do 443-742 (KR)
(72) Inventor: Kim, Jinyong, 443-742 Gyeonggi-do (KR); Jeon, Jinyoung, 443-742 Gyeonggi-do (KR); Kang, Jiyoung, 443-742 Gyeonggi-do (KR); Kim, Daesung, 443-742 Gyeonggi-do (KR); Lee, Boyoung, 443-742 Gyeonggi-do (KR)
(74) Representative: Birchenough, Lewis

(57) **Abstract**

A touch and gesture input-based control method for a mobile terminal or handheld display is provided for facilitating the switching operation between for an object in response to a gesture input subsequent to a touch input. The method includes detecting a touch input; selecting at least one object corresponding to the touch input; detecting a gesture input; and performing switching corresponding to the gesture input in a state where the object is held at a position of the touch input. The invention permits paging through lists of documents or icons, etc., while retaining the display of the held object on the touch screen.

## Description

### BACKGROUND OF THE INVENTION

### Field of the Invention

The present invention relates generally to a touch and gesture input-based control method and a portable terminal configured to perform the control method. More particularly, although not exclusively, the present invention relates to a touch and gesture input-based control method for performing a switching operation utilizing a gesture input subsequent to a touch input.

### Description of the Related Art

With the advance of communication technology and interactive display technology, various types of electric devices, for example smartphones, tablets and other types of portable terminal etc., employ various means for receiving inputs to control the device, for example a touchscreen, in order to enable a user to control the device more conveniently. Accordingly, various types of input means are being developed to recognize touch, motion, and gesture inputs, for example with the assistance of one or more sensors. These types of input means can reduce the need to type out commands on a relatively small display screen, and allow commonly requested commands to be performed quickly by using gesture inputs.

Technological advances have made it possible for electronic devices, for example portable terminals, to be configured to recognize various types of inputs, as user requirements for simplified device manipulation grow.

However, in spite of the capability of devices to detect various types of inputs, conventional terminals are limited in utilizing their input detection capability for controlling device operations, which may result in failure of meeting the needs of users.

### SUMMARY OF THE INVENTION

It is an aim of certain embodiments of the present invention to address, solve, mitigate or obviate, at least partly, at least one of the problems, disadvantages and/or drawbacks associated with the related art, for example at least one of the problems, disadvantages and/or drawbacks mentioned above. Certain embodiments of the present invention aim to provide at least one advantage over the related art, for example at least one of the advantages mentioned below.

Accordingly, certain embodiments of the present invention provide a touch and gesture input-based control method and a terminal that performs an operation in response to touch and gesture inputs.

Certain embodiments of the present invention provide a touch and gesture input-based control method and a terminal that switches between objects in response to a gesture input subsequent to an ongoing touch input.

In accordance with an aspect of the present invention, there is provided a method for controlling a terminal, the method comprising the steps of: detecting a touch input; selecting at least one object corresponding to the touch input; detecting a gesture input; and performing a switching corresponding to the gesture input in a state where the object is held at a position of the touch input.

In accordance with another aspect of the present invention, there is provided a method for controlling a terminal, the method comprising the steps of: detecting a first user input (e.g. a touch input); selecting (e.g. "holding"), according to the first user input, at least one object from a plurality of displayed objects; detecting a second user input (e.g. a gesture input) while the at least one object is selected; and performing a switching operation according to the second user input, the switching operation for switching display of the plurality of displayed objects, wherein the switching operation is performed such that the at least one selected object is not switched.

In an exemplary embodiment according to any of the aspects disclosed herein, the object that is held at a position of the touch input includes at least one of an icon, a text, an image, a file, a folder, a content of a web browser, a web address, and a web link.

In an exemplary embodiment according to any of the aspects disclosed herein, the step of selecting at least one object corresponding to the touch input includes presenting the object in one of activated, enlarged, shrunk, shaded states.

In an exemplary embodiment according to any of the aspects disclosed herein, the step of detecting a gesture input comprises sensing the gesture input in the state wherein the touch input is maintained.

In an exemplary embodiment according to any of the aspects disclosed herein, the step of performing a switching corresponding to the gesture input comprises at least one of page switching, folder switching, tab switching, application switching, and task switching.

In an exemplary embodiment according to any of the aspects disclosed herein, the step of performing a switching includes holding the selected object corresponding to the touch input; and switching from among a plurality pages having at least one object in the state where the selected objected is held on the screen.

In an exemplary embodiment according to any of the aspects disclosed herein, the step of performing a switching includes holding the selected object corresponding to the touch input; and switching from among higher and lower folders along a file path or between folders in a folder list.

In an exemplary embodiment according to any of the aspects disclosed herein, the step of performing a switching includes holding the selected object corresponding to the touch input; and switching from among a plurality of taps provided by a web browser.

In an exemplary embodiment according to any of the aspects disclosed herein, the step of performing a switching includes holding the selected object corresponding to the touch input; and switching from among applications or tasks listed in a predetermined list or a list of currently running applications or tasks.

In an exemplary embodiment according to any of the aspects disclosed herein, the step of switching from among applications or tasks includes displaying the selected object in a format arranged optimally for the application or task.

In an exemplary embodiment according to any of the aspects disclosed herein, the method further includes detecting a release of the touch input; and performing an operation corresponding to the release of the touch input for the selected object.

In an exemplary embodiment according to any of the aspects disclosed herein, the operation corresponding to the release of the touch input includes one or more of arranging the object at a position targeted by the touch input, executing a link of the selected object in a tab of the web browser, and pasting the object on and execution screen of the application or task.

In accordance with another aspect of the present invention, there is provided a terminal comprising: a display unit for displaying a screen; an input unit for detecting touch and gesture inputs; a control unit for detecting selection of at least one object, corresponding to the touch input, displayed on the display unit (e.g. touch-screen display) and performing switching of the images displayed on the display, corresponding to the gesture input, in a state where the object is held at a position of the touch input.

In accordance with another exemplary aspect of the present invention, there is provided a terminal comprising: an input unit for detecting a first user input (e.g. a touch input) and a second user input (e.g. a gesture input); a display unit for displaying a plurality of objects; a control unit for selecting (e.g. "holding"), according to the first user input, at least one object from the plurality of displayed objects, and for performing a switching operation according to the second user input, wherein the second user input is detected while the at least one object is selected, the switching operation for switching display of the plurality of displayed objects, wherein the switching operation is performed such that the at least one selected object is not switched.

In an exemplary embodiment according to any of the aspects disclosed herein, the switching includes at least one of page switching, folder switching, tab switching, application switching, and task switching.

In an exemplary embodiment according to any of the aspects disclosed herein, the control unit is configured to hold the selected object corresponding to the touch input and switch from among a plurality pages having at least one object in the state where the selected objected is held on the screen.

In an exemplary embodiment according to any of the aspects disclosed herein, the control unit is configured to hold the selected object corresponding to the touch input and switch from among higher and lower folders along a file path or between folders in a folder list.

In an exemplary embodiment according to any of the aspects disclosed herein, the control unit is configured to hold the selected object corresponding to the touch input and switch among a plurality of tabs provided by a web browser.

In an exemplary embodiment according to any of the aspects disclosed herein, the control unit is configured to hold the selected object corresponding to the touch input and switch among applications or tasks listed in a predetermined list or a list of currently running applications or tasks.

In an exemplary embodiment according to any of the aspects disclosed herein, the control unit is configured to control the display unit to display the selected object in a format arranged (e.g. optimally) for the application or task.

In an exemplary embodiment according to any of the aspects disclosed herein, the input unit is configured to detect a release of the touch input, and the control unit is configured to perform one of arranging the object at a position targeted by the touch input, executing a link of the selected object in a tab of the web browser, and pasting the object on an execution screen of the application or task.

In accordance with another aspect of the present invention, there is provided a method for controlling a terminal, the method comprising the steps of: detecting a touch input, by a sensor on a touchscreen display; detecting, by a control unit of the terminal, a selection of at least one object of a plurality of objects corresponding to the touch input on the touchscreen display; detecting a gesture input in a state wherein the touch input is maintained for at least a partial temporal overlap with detection of the gesture; and performing switching of a display of one or more of the plurality of objects other than the at least one object which is being held at a same position on the touchscreen display and corresponding to a direction associated with the gesture input in a state wherein the at least one object which is being held at a position of the touch input during detecting the gesture input on the touchscreen display.

Another aspect of the present invention provides a computer program comprising instructions arranged, when executed, to implement a method, system and/or apparatus, in accordance with any one of the aspects disclosed herein. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will be more apparent from the following detailed description when taken in conjunction with the accompanying drawings, in which:
FIG. 1 is a block diagram illustrating a configuration of a terminal according to an exemplary embodiment of the present invention;
FIG. 2 is a front view of a terminal equipped with a camera sensor and an infrared sensor;
FIG. 3 is a flowchart illustrating a method for controlling the terminal according to an exemplary embodiment of the present invention;
FIG. 4 is a diagram illustrating an exemplary touch input action for use in an exemplary embodiment of the present invention;
FIG. 5 is a diagram illustrating a combination of touch and gesture inputs for use in an exemplary embodiment of the present invention;
FIG. 6 is a diagram illustrating an exemplary page switching operation based on the combination of the touch and gesture inputs according to an exemplary embodiment of the present invention;
FIG. 7 is a diagram illustrating an exemplary folder switching operation based on the combination of the touch and gesture inputs according to an exemplary embodiment of the present invention;
FIG. 8 is a diagram illustrating an exemplary tab switching operation based on the combination of the touch and gesture inputs according to an exemplary embodiment of the present invention; and
FIG. 9 is a diagram illustrating an exemplary application or task switching operation based on the combination of the touch and gesture inputs according to an exemplary embodiment of the present invention.

### DETAILED DESCRIPTION OF EMBODIMENTS OF THE INVENTION

The following description of exemplary embodiments of the present invention, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The same or similar components may be designated by the same or similar reference numerals although they may be illustrated in different drawings. Detailed descriptions of structures, constructions, functions or processes known in the art may be omitted for clarity and conciseness, and to avoid obscuring the subject matter of the present invention.

Embodiments of the present invention are suitable for many uses, including controlling a touch and gesture input-enabled terminal.

Embodiments of the present invention may be provided in the form of various types of touch and gesture input-enabled terminals, including, for example, a smartphone, a portable terminal, a mobile terminal, a Personal Digital Assistant (PDA), a Portable Multimedia Player (PMP), a laptop, a Note Pad, a Wibro terminal, a tablet PC, a smart TV, a smart refrigerator.

Terminology used herein is for the purpose of illustrating, to a person of ordinary skill in the art, particular exemplary embodiments and is not used for limiting the scope of the present invention, as defined by the claims. Unless otherwise defined, all terms or expressions used herein have the same or similar meaning as commonly understood by one of ordinary skill in the art, and should not be interpreted as having an excessively comprehensive meaning nor as having an excessively contracted meaning. Nor are the terms and expression used herein limited to general dictionary definitions.

As used herein, singular forms, for example "a", "an" and "the", are intended to include the plural forms as well, unless the context otherwise requires. Thus, for example, reference to "an object" includes reference to one or more of such objects.

As used herein, the terms "comprise", "include" and "contain", and variations of these terms, for example "comprises", "comprising," "includes" and "including", means "including but not limited to", and are used to specify the presence of stated features, integers, steps, processes, operations, elements, characteristics, properties, components, and/or groups thereof, but do not preclude the presence or addition of one or more other features, integers, steps, processes, operations, elements, characteristics, properties, components, and/or groups thereof.

Features, integers, steps, processes, operations, elements, characteristics, properties, components, and/or groups thereof described in conjunction with a particular aspect, embodiment or example of the present invention are to be understood to be applicable to any other aspect, embodiment or example described herein unless incompatible therewith.

As used herein, language in the general form of "X for Y" (where Y is some action, process, activity, operation or step and X is some means for carrying out that action, process, activity, operation or step) encompasses means X adapted, configured or arranged specifically, but not exclusively, to do Y.

The term "touch" as used herein refers to an action in which a physical object, for example a part of the user's body (e.g. hand, finger) and/or an input object, for example a stylus pen, moves to within a predetermined distance from, or makes physical contact with, a touch surface, for example a touch pad or touch screen.

In embodiments of the present invention, a displayed graphical object, including any suitable type of graphical element, may be designated as "held" when the user performs a certain action, for example in the form of a touch or gesture input. A "held" object may be "released" such that the object is no longer designated as held when the user performs a certain other action, for example in the form of a touch or gesture input.

For example, an object may be designated as "held" when the user touches the displayed object. The object may remain "held" while the touch is maintained. In this case, the "held" object may be "released" when the user releases the touch. Alternatively, the object may be designated as "held" when the user taps or double-taps the displayed object. The object may remain "held" even if a touch is not maintained. In this case, the "held" object may be "released" when the user taps or double-taps the displayed object again, or when the user performs a certain gesture. Related terms, for example "hold" and "holding" should be construed accordingly. In various embodiments, one object may be held, or two or more objects may be held simultaneously.

In embodiments of the present invention, a held object is moved, arranged, processed, manipulated or handled differently to objects that are not held. For example, when a user performs an action or gesture to perform switching of objects, pages screens, applications, tabs etc. the position of a held object may remain unchanged. That is, a held object may remain held at a designated position.

The terms "held" and "hold" are to be interpreted broadly and do not require a user's body part (such as a finger or finger) or a stylus to remain in contact or near-contact with an object on the screen to hold the object while a gesture is performed to cause switching of pages, applications, tabs, etc. For examples, a single or double tap of an object can designate the object to be "held", and then a gesture motion or motions can be performed to change pages or applications while the object remains "held" at a designated position. In such a case where the selected object is not being held by a finger or stylus, then a "release" may include a motion or subsequent touch to indicate that the object is released.

Exemplary embodiments of the present invention are now described with reference to the accompanying drawings in detail.

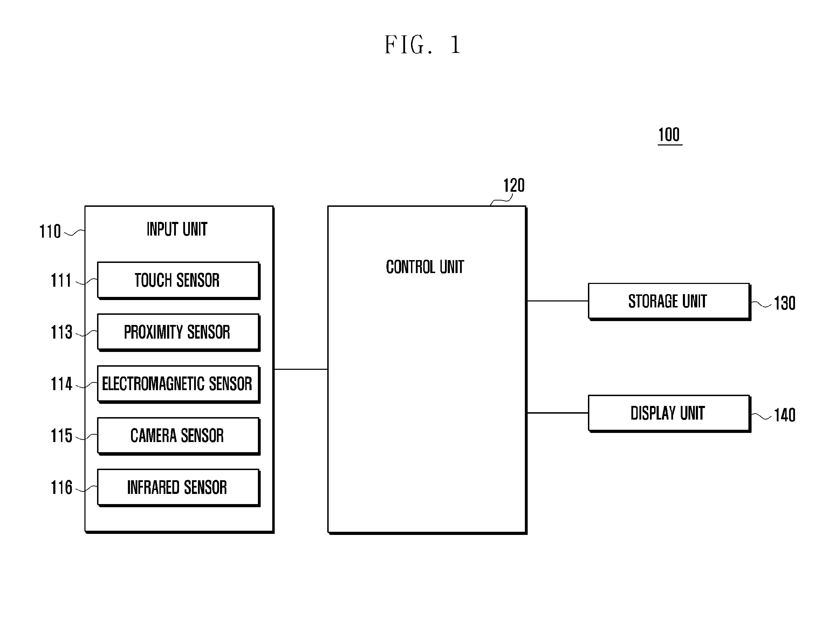

FIG. 1 is a block diagram illustrating a configuration of a terminal according to an exemplary embodiment of the present invention.

As shown in FIG. 1, the terminal 100 includes an input unit 110, a control unit 120, a storage unit 130, and a display unit 140.

The input unit 110 may generate a signal in response to a user input. The input unit 110 may include one or more of a touch sensor 111, a proximity sensor, an electromagnetic sensor 113, a camera sensor 114, and an infrared sensor.

The touch sensor 111 detects a touch input made by the user. The touch sensor 111 may be implemented, for example, in the form of a touch film, a touch sheet, and a touch pad. The touch sensor 111 may detect a touch input and generate a corresponding touch signal that is output to the control unit 120. The control unit 120 can analyze the touch signal to perform a function corresponding thereto. The touch sensor 111 can be implemented to detect the touch input made by the user through the use various input means. For example, the touch input may constitute detecting a part of the user's body (e.g. finger or hand) and/or a physical object (e.g. a stylus pen or other manipulation button). The touch sensor 111 may detect the approach of an object within a predetermined range as well as a direct touch according to the implementation.

With continued reference to FIG. 1, the proximity sensor 113 is configured to detect a presence/absence, approach, movement, movement direction, movement speed, and/or shape/size of an object using the strength of an electromagnetic field, without physical contact. The proximity sensor 113 may be implemented with at least one of a transmission-type photosensor, direct reflection-type photosensor, mirror reflection-type photosensor, high-frequency oscillation-type proximity sensor, capacitive proximity sensor, magnetic-type proximity sensor, and infrared proximity sensor.

The electromagnetic sensor 114 detects a touch or approach of an object based on the variation of the strength of an electromagnetic field and can be implemented, for example, in the form of an input pad of Electro Magnetic Resonance (EMR) or Electro Magnetic Interference (EMI). The electromagnetic sensor 114 may be implemented with a coil for inducing a magnetic field and by detecting the approach of an object having a resonance circuit causing energy variation of the magnetic field generated by the electromagnetic sensor 114. The electromagnetic sensor 114 can detect the input, for example, by means of a stylus pen, which is one example of an object having the resonance circuit. The electromagnetic sensor 114 can also detect a proximity input in which an object is located in close proximity to the terminal 100, or is hovering close to the terminal 100.

The camera sensor 115 converts an image (light) input through a lens to a digital signal, for example by means of Charge Coupled Devices (CCD) or Complementary Metal Oxide Semiconductor (CMOS). The camera sensor 115 is capable of storing the digital signal in the storage unit 130 temporarily or permanently. The camera sensor 115 may be capable of locating and tracing a specific point in a recognized image to detect a gesture input.

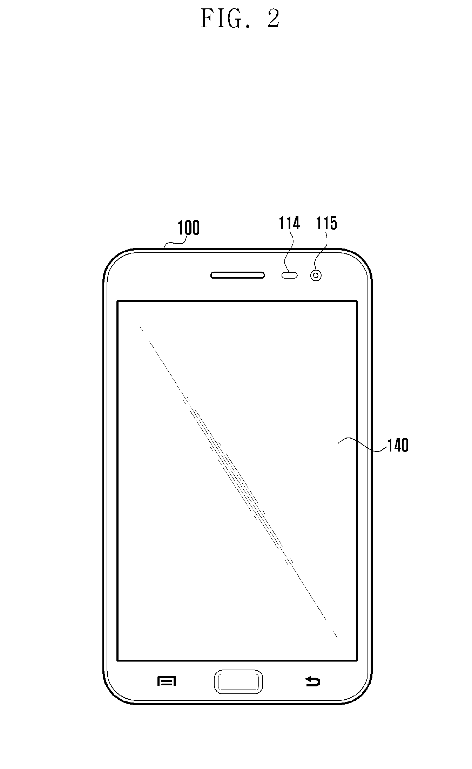

Referring now to FIG. 2, the camera sensor 115 may include combined lenses facing its front and/or rear surface to capture and convert an image through the lenses.

An infrared sensor 116, which may also be referred to as an IR sensor or an LED sensor, may include a light source for emitting infrared light to illuminate an object, and a light receiver for receiving the light reflected by the object (e.g. a hand) approaching or close to the terminal 100. The infrared sensor 116 may detect the variation in the amount of the light received by the light receiver so as to sense the movement of and distance from the object. Referring again to FIG. 2, the infrared sensor 116 may be arranged at the front and/or rear side of the terminal 100 so as to receive the infrared light emitted from outside of the terminal 100 and/or reflected by an object, for example a part of the user's body (e.g. hand).

According to an exemplary embodiment of the present invention, the input unit 110 may detect the touch and gesture inputs using one or more sensors. The input unit 110 may detect touch and gesture inputs made simultaneously or sequentially, and may detect a gesture input made during an ongoing touch input.

The control unit 120, which may be comprised of hardware, for example a processor or microprocessor, configured to control some or all of the overall operations of the terminal and the components. For example, the control unit 120 may control the operations and functions of the terminal 100 according to an input made through the input unit 110.

According to an exemplary embodiment of the present invention, the control unit 120 is configured to control switching based on the detection of touch and gesture inputs detected by one or more sensors. For example, the switching may comprise one or more of a page switching, folder switching, tab switching, application switching, task switching, and any other suitable type of switching. Switching may include, for example, a process of scrolling through a list, set or sequence of displayed or displayable items (e.g. icons, folders, objects, images, text, screens, pages, application etc.), replacing or exchanging at least some of a first set of one or more displayed items with a second set of one or more displayed items, and/or modifying the arrangement or layout of one or more displayed items.

Detailed operations of the control unit 120 are now described in more detail hereinafter with reference to the accompanying drawings.

The storage unit 130 may be used for storing programs and commands for the terminal 100. The control unit 120 may be configured to execute the programs and commands that may be stored in the storage unit 130.

The storage unit 130 may comprise, for example, at least one of a flash memory, hard disk, micro multimedia card, card-type memory (e.g. SD or XD memory), Random Access Memory (RAM), Static RAM (SRAM), Read Only Memory (ROM) Electrically Erasable Programmable ROM (EEPROM), Programmable ROM (PROM), magnetic memory, magnetic disc, and optical disk.

According to an exemplary embodiment of the present invention, the storage unit 130 may be utilized to store at least one of an icon, text, image, file, folder, and various forms of content including objects, application, and service functions.

According to an exemplary embodiment of the present invention, the storage unit may store information relating to operations corresponding to inputs made through the input unit 110. For example, the storage unit 130 may be used to store information relating to switching operations corresponding to touch and gesture inputs.

With continued reference FIG. 1, the display unit 140 displays (outputs) certain information processed in the terminal 100. For example, the display unit 150 may display a User Interface (UI) or Graphical User Interface (GUI) according to voice detection, state recognition, and/or function control, for example.

The display unit may be implemented, for example using at least one of a Liquid Crystal Display (LCD), Thin Film Transistor LCD (TFT LCD), Organic Light-Emitting Diode (OLED), flexible display, and 3-Dimentional (3D) display.

The display unit 140 may form a touchscreen when implemented in combination with the touch sensor as a part of the input unit 110. The touchscreen-enabled display unit 140 may operate as both an input device and an output device.

According to an exemplary embodiment of the present invention, the display unit 140 may display various graphical elements, for example icons, text, images, file lists, and folder lists. The display unit 140 may display, for example, at least one of a web browser and contents, website address, and web link.

According to an exemplary embodiment of the present invention, the display unit 140 may display at least one object dynamically according to a switching operation under the control of the control unit 120. For example, the display unit 140 may display at least one object moving in a certain direction on the screen in accordance with a page switching operation.

Although certain embodiments have been described in relation to a terminal as depicted in FIG. 1, in various embodiments, the terminal may further include components other than those shown in Figure 1, and/or some of the components constituting the terminal may be omitted or replaced with corresponding or equivalent components performing the same or similar functions.

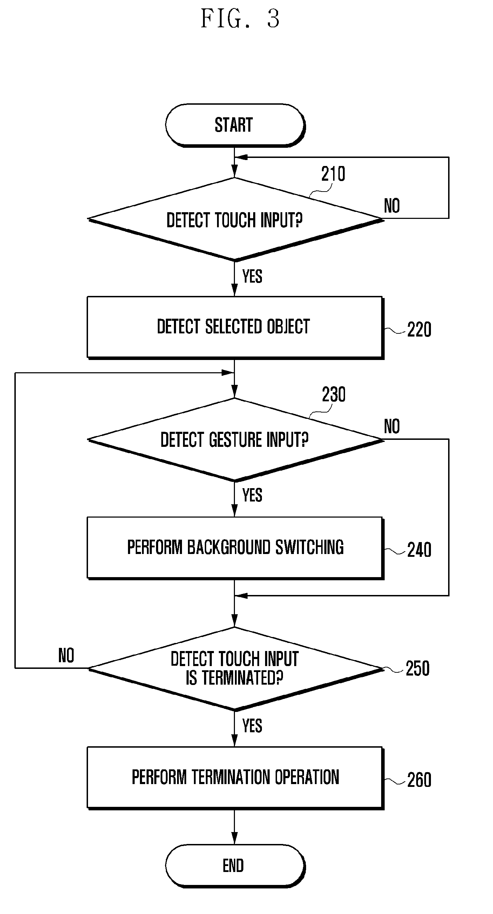

FIG. 3 is a flowchart illustrating a method for controlling a terminal (e.g. the terminal illustrated in Figure 1) according to an exemplary embodiment of the present invention.

Referring now to FIG. 3, an exemplary method for controlling the terminal according to the presently invention will be discussed herein below.

At step 210, the terminal 100 determines whether or not a touch input is detected.

The terminal 100 may detect more than one touch input, for example made sequentially or simultaneously. According to the implementation, the terminal 100 may be configured to detect different types of touch, for example a proximity-based input or pressure-based input, as well as a touch-based input. The term "touch" may be understood to encompass not only a touch involving direct physical contact, but also relatively close proximity of an object, for example a finger or stylus, without necessarily involving direct physical contact, which may be detected, for example, by a proximity sensor.

If a touch is detected at step 210, then at step 220 the terminal 100 selects an object according to the detected touch.

The terminal 100 may be configured to determine the position on the display where the touch is made. For example, the terminal 100 may determine 2-dimensional or 3-dimensional coordinates of the position wherein the touch is made on the screen. For example, the 3-dimension coordinates may include two coordinates indicating a 2-dimensional position on a touch screen and a third coordinate indicating the distance between the object applying the touch and the touch screen. Furthermore, the terminal 100 may be configured to check the pressure, duration, and/or movement of the touch (e.g. drag, variation of the distance between multiple touch points and movement pattern of the touch).

In addition, the terminal 100 may select at least one object corresponding to the touch input. For example, the terminal 100 may be configured to detect at least one object (141) located at the position where the touch input is made. The object may be any form of graphical entity, for example an icon, text, an image, a file, a folder, a web content, a web address, and a web link etc. The terminal 100 may display the selected object differently from other objection, for example in the form of activated, enlarged, contracted, or shaded. The terminal 100 may display the selected object as activated, enlarged, shrunk, or shaded, for example according to the time duration for which the touch input has been maintained.

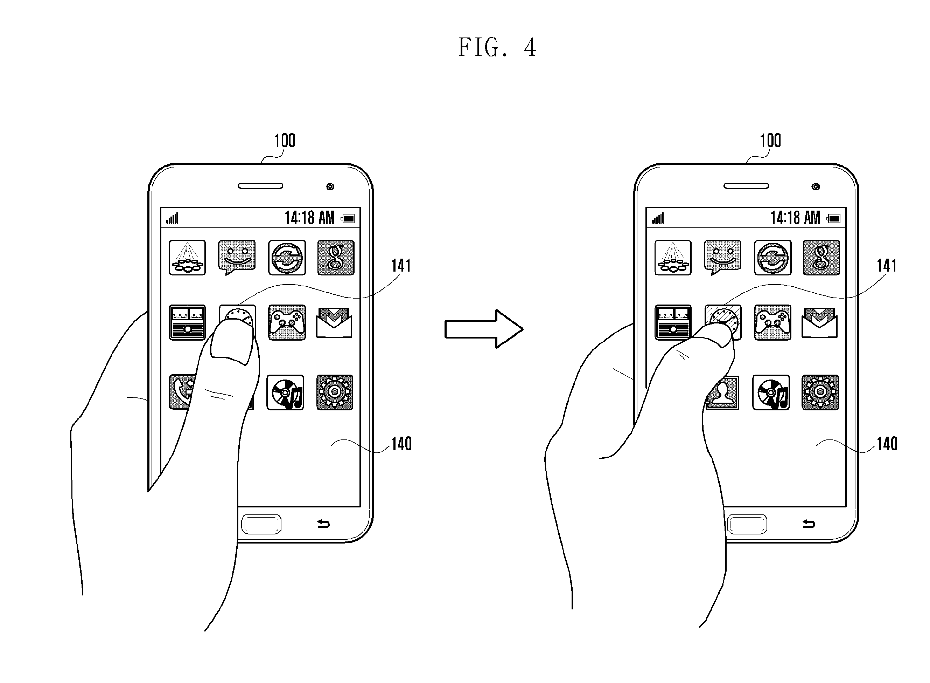

Referring now to the exemplary case of FIG. 4, the terminal 100 is operated by a user for selection of an icon according to a touch input detected while an idle mode screen is displayed. The terminal 100 may display the selected icon (141) in shaded form.

In the case that a touch is made and then moved without releasing the touch, the terminal 100 displays the movement of the selected object (141) according to the movement of the touch. For example, if a touch is detected and moved in a certain direction, the terminal 100 may display the movement of the selected object in the same direction. The terminal 100 may express/display an indication of the moving state of the selected object. For example, the terminal 100 may display the selected object with an additional indicator or a visual, audio or tactile effect, for example a vibration, enlargement, shrinking, or shading to express or indicate that the object is in the movable state.

Next, referring back to the flowchart of FIG. 3, at step 230 the terminal 100 determines whether a gesture input is detected.
For example, the terminal 100 may detect a swipe gesture in a certain direction, a drawing gesture tracing a certain shape, and/or a shaping gesture wherein a user's hand forms a certain shape. The terminal 100 may detect a gesture input direction, speed, shape, and/or distance from the terminal 100. According to one exemplary implementation, the terminal 100 may detect an approach input or a pressure input instead of a gesture input.

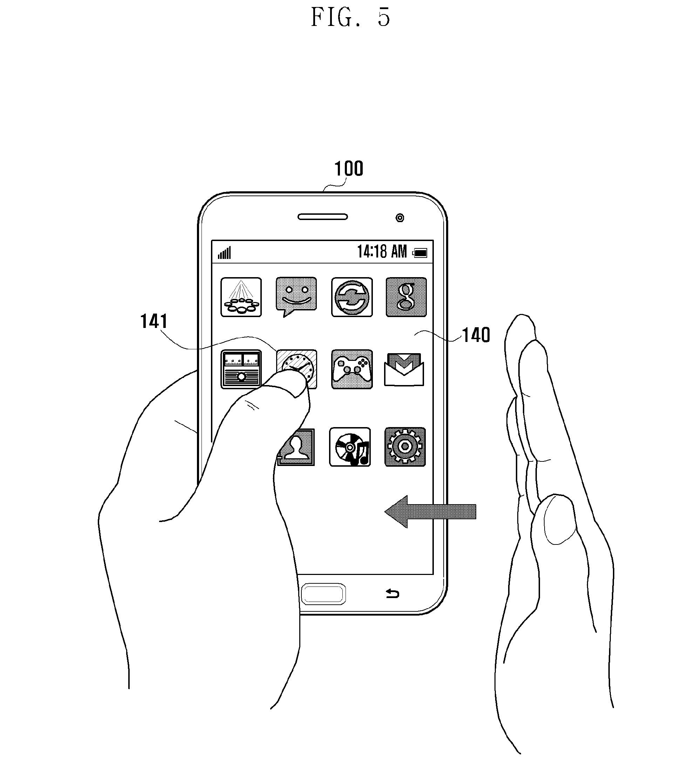

The terminal 100 detects the gesture input in a state in which the touch input is maintained. For example, the gesture input is detected within a time period in which the touch input is maintained (i.e. the gesture is detected after the touch input is initially made but before the touch is released). In some embodiments, the gesture may be both initiated and completed while the touch input is maintained. In other embodiments, the gesture may be initiated, but not necessarily completed, while the touch input is maintained. Referring to the exemplary case of FIG. 5, the terminal 100 detects a touch input and a subsequent gesture input made in the state in which the touch input is maintained.

If at step 230, the gesture input is detected, then at step 240 the terminal 100 performs a switching operation.

More particularly, the terminal 100 performs a switching operation corresponding to the detected gesture input. The terminal 100 searches for a switching operation corresponding to the gesture input and, if a corresponding switching operation is found, the terminal performs the corresponding switching operation.

The switching operation may comprise any suitable switching operation, for example a page switching operation, a folder switching operation, a tab switching operation, an application switching operation, and a task switching operation. The skilled person will appreciate that the present invention is not limited to these specific examples.

The page switching operation may be performed such that the current page is switched to another page with the exception of the selected object (141). The page switching operation may be performed across the screen of the display on which a plurality of pages, each having at least one object, are turned one-by-one in response to a user's request. For example, the page switching operation can be performed on the idle mode screen, file or folder list screen, selectable menu list screen, document screen, e-book screen, phonebook screen, etc.. The skilled person will appreciate that the present invention is not limited to these specific examples.

The terminal 100 may perform page switching such that, when the current page comprises a plurality of objects, including the selected object, the display is switched to another page wherein the selected object is fixed or held according to the touch input. For example, the terminal 100 may turn the current page along with non-selected objects (which may include a background image) to a next page on the screen, for example in a horizontal or a vertical direction while the object selected (i.e. held) by the touch input remains at a fixed position on the display. At this time, the page turning direction and the number of page turned may be determined, for example according to the direction of the gesture (e.g. horizontal or vertical) or the shape of the gesture (e.g. shape of the hand expressing a certain number). According to the page switching operation, the objects of the previously displayed page disappear except for the object being held, and objects of the new page appear on the screen. In the case where there are no other pages corresponding to the gesture input, the terminal 100 may skip turning the page and/or provide a notification (e.g. display a message, icon, or image) that there are no other pages.

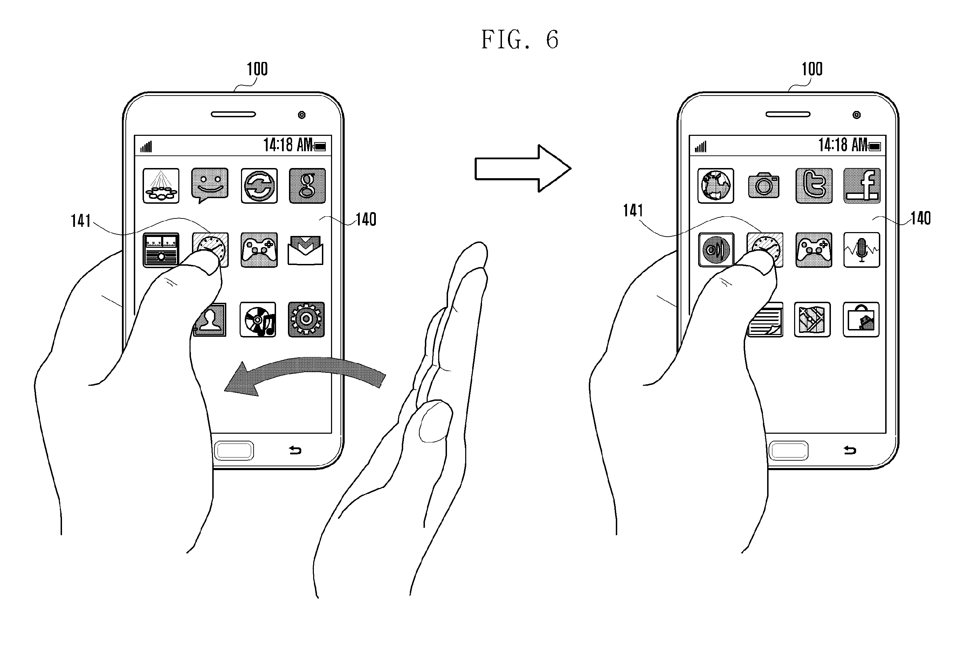

Referring to the exemplary case of FIG. 6, the terminal 100 selects an icon on the idle mode screen in response to a touch input. At this time, the terminal 100 displays the selected icon in shaded form. The terminal 100 may detect a subsequent gesture input. The gesture input may comprise any detectable motion, but in this example comprises a sweeping gesture in the direction from right to left. The terminal 100 may perform the page switching operation while fixing or holding the icon selected in response to the touch input. In other words, the terminal 100 turns the page in the direction corresponding to the direction of the gesture. The terminal 100 moves the objects to the left, with the exception of the selected object, such that another page appears from the right side.

As shown in FIG. 6, at least one object 141 is being held at a position of the touch input during detection of the gesture input. The skilled person will understand and appreciate that the term "during" may refer to temporal overlap (i.e. an overlapping time period) between the touching of the object and the detection of the gesture input. For example, it is not required in some embodiments that the object be held throughout a recognized gesture that is made to sweep pages.

The folder switching operation may comprise navigating between folders based on the file path of the selected object. The folder switching operation may be performed from among files or folders. For example, the folder switching operation may be performed between folders including, for example, documents, images, pictures, e-books, music files, application execution files or shortcut icons, program execution files or shortcut icons, service execution files or shortcut icons.

For example, a user may hold or designate a photo, and then, using a recognized gesture, switch among applications, so that the photo can be inserted in or attached to an email, text message, Facebook page, any other suitable kind of communication application that permits transmitting images.

The terminal determines the file path of the selected object held corresponding to the touch input. The terminal 100 may move a folder to a higher or lower level folder along the file path, or a previous or a next folder in a folder list. At this time, a decisions as to whether to move the higher or lower folder level folder or whether to previous on next folder on the same level can be determined, for example, according to the direction (horizontal or vertical) of the gesture or the shape of the gesture (e.g. shape of the user's hand indicating a certain number). According to the folder switching, the objects of the old folder disappear and the objects of the new folder appear on the screen. In the case that there is no other folder corresponding to the gesture input, the terminal 100 may skip the folder switching operation or provide a notification (e.g. display a message, icon, or image) that there is no other folder.

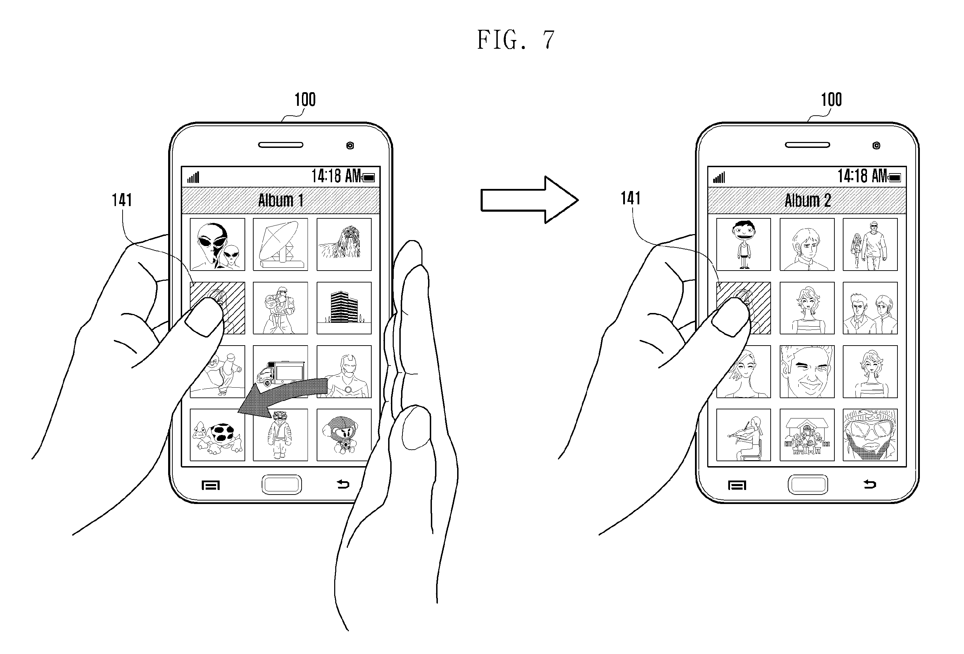

Referring now to the exemplary case of FIG. 7, the terminal 100 selects a photo in the Album 1 folder according to a touch input. At this time, the terminal 100 displays the selected photo in a shaded form. The terminal 100 may detect a subsequent gesture input. The terminal 100 may also detect the subsequent gesture input while the selected photo is held. The gesture input may be, for example, a sweeping gesture input made in a direction from the right to the left. The terminal 100 may perform the folder switching operation while holding the selected photo, such that the selected photo is maintained at the position corresponding to the touch input. In other words, the terminal 100 may move the folder in the direction corresponding to the gesture input. The terminal 100 controls the operation such that the objects included in the Album 1 folder, with the exception of the selected object, disappear from the screen and then a list of photos included in the next folder, e.g. Album 2 folder, appear on the screen.

The tab switching operation may comprise navigating between tabs representing respective applications or programs. The tab switching operation may be performed, for example, among tabs of a web browser, menu window, e-book, and/or document viewer applications or programs.

The terminal 100 may hold an object corresponding to a touch input and perform the tab switching operation. For example, the terminal 100 may move the current tab, or at least one object included in the current tab, in a certain direction (e.g. horizontal or vertical direction) relative to another tab, or place the current tab in another tab. At this time, the tab switching direction and the number of switching operations may be determined, for example, according to the direction (e.g. horizontal or vertical) or the shape of the gesture. According to the tab switching operation, the objects of a tab disappear and other objects of another tab appear on the screen. In the case that there are no other tabs corresponding to the gesture input, the terminal 100 may skip the tab switching operation and provide a notification (e.g. display a message, icon, or image) that there is no target tab.

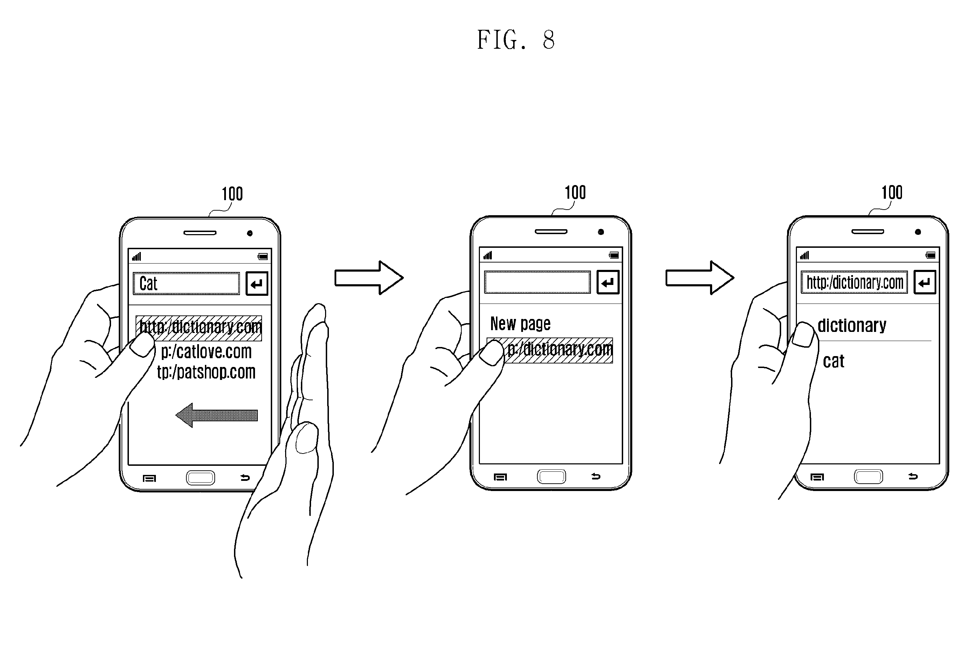

Referring to the exemplary case of FIG. 8, the terminal 100 may select at least one of the objects presented in the current tab of the web browser screen corresponding to a touch input. The object may comprise, for example, a web page address, or a text, an image, an icon, or a flash including a link to a certain webpage. At this time, the terminal 100 changes the presentation of the selected object, for example by changing the color, font, boldness, size, and shade effect. The terminal may detect a gesture input subsequent to the ongoing touch input. The gesture input may comprise, for example, a sweeping gesture input made in a direction from left to right. The terminal performs the tab switching operation while the selected object is held at a position of the display according to the touch input. For example, the terminal moves the tab in the direction corresponding to the gesture input direction. The terminal 100 controls such that the objects of the old tab, with the exception of the selected object, disappear and the objects belonging to another tab appear on the web browser screen along with the selected object.

The application or task switching operation may comprise a switching between execution screens of the application or tasks for moving a selected object. The application or task switching may be performed from among the different applications or tasks, for example predetermined by the user or terminal manufacturer, or from among the applications or tasks that are currently running. The terminal 100 receives and stores a list of the switching-available applications or tasks that are provided by the user or the terminal manufacturer. The terminal 100 identifies the currently running applications or tasks and performs the switching operation based on preferences, usage frequencies, and operation times of the respective applications or tasks. The application or task may comprise, for example, a messaging, SMS, email, memo, or call application or task. The skilled person will appreciate that the present invention is not limited to these specific examples.

According to an exemplary embodiment of the present invention, the terminal 100 performs the application or task switching operation with the objects, except for the selected object, displayed on the screen while holding the object selected by the touch input. For example, the terminal 100 moves the objects (which may include the background image) in a horizontal or vertical direction to display another application or task window on the screen while holding the selected object at the position corresponding to the touch input. At this time, the switching direction and the number of switching times may be determined according to the direction (e.g. horizontal or vertical) or shape (e.g. shape of the user's hand symbolizing a certain number) of the gesture input. According to the application or task switching operation, the application or task and the objects belonging thereto disappear and another application or task and objects belonging thereto appear on the screen. In the case where no other applications or tasks are targeted by the gesture input, the terminal 100 may provide a notification (e.g. display a message, icon, or image) that there is no target application or task for display.

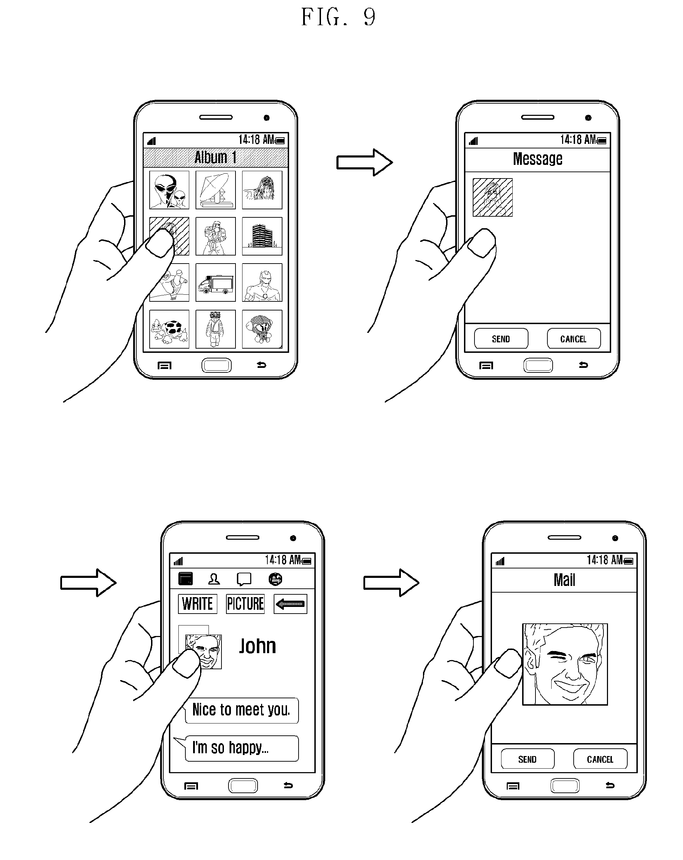

Referring now to the exemplary embodiment of FIG. 9, the terminal 100 selects an image targeted by a touch input. At this time, the terminal may display the image with an enlarged, shrunk, shaded, or vibrating form. The terminal 100 detects a gesture input. The terminal 100 is capable of detecting the gesture input subsequent to initiation of the ongoing touch input. The gesture input may be, for example, a sweeping gesture input made in the direction from right to left. The terminal 100 performs the application or task switching operation while holding the selected image at a position of the touch input. The terminal 100 may perform the switching operation in the direction of the gesture input. The terminal 100 controls such that the objects, with the exception of the selected image, move to the left and disappear, and then objects belonging to the previous or next task appear on the screen.

The terminal 100 displays the object selected, in association with the application or task switching, in a format optimized for the target application or task. For example, the terminal 100 may present a preview image of the selected object in the format optimized for adding, inserting, pasting, and attaching to the target application or task. The terminal 100 may display the object as enlarged, shrunk, rotated, or changed in extension or resolution, or along with a text, image, or icon indicating addition, insertion, paste, or attachment.

Referring now to the exemplary embodiment of FIG. 9, if an application switching operation switching the application to the text messaging application is performed, the terminal 100 displays the selected image in an attached format in the message input window. At this time, the terminal 100 may display an icon for notifying the user of the attachment of the image to the text message. If the application switching operation is performed to switch the application to the email application, the terminal 100 displays the selected image in the attached format within the mail composition window. The terminal 100 displays the image in the format attached to the mail along with the code or extension for image attachment such as html and xml. At this time, the terminal 100 may display at least one of the file name, icon, and file attachment menu for notifying the user of the image file attachment to the email.

Next, the terminal 100 determines at step 250 whether the touch input is released.

After the execution of the switching operation, or if no gesture input is detected, the terminal 100 determines whether a touch input is terminated. It is determined that the touch input is terminated when the touch input detects that the user releases the contact of an input device from the touchscreen of the terminal 100.

If the touch input is not terminated, the terminal 100 repeats the switching operation corresponding or according to the gesture input detection. If the user releases the contact of the input device from the terminal 100, the switching operation of terminal 100 is then terminated.

Otherwise, if the touch input is terminated, the terminal 100 terminates the procedure at step 260.

The termination operation may comprise, for example, one or more of aligning the selected object at a position targeted by the touch input, executing the link of the selected object on the tab of the web browser, and pasting the object onto the application or task execution screen.

In the exemplary embodiment of FIG. 6, if the touch input is terminated, the terminal 100 may arrange the selected icon at the position where the touch has been released. In order to place the icon at the position targeted by the touch input, the terminal may move or rearrange the icons on the page. The terminal 100 may also store information about the rearranged page. In certain embodiments, an icon or other item may be designated by a tap or a contactless pointing. For example, the designated icon or other item is recognized by the touch screen as one that should remain stationary while a gesture, for example a sweeping motion, moves through applications, screens, etc. Another recognized act, for example a double tap, or another tap, or a motion, may signal that the icon or other item is no longer designated.

In the exemplary embodiment shown in FIG. 7, if the touch input is terminated, the terminal 100 may arrange the page by placing the selected image at the position where the touch has been released. The terminal 100 may rearrange the list of images in the folder navigated to insert the image. The terminal 100 may move and store the selected image in the corresponding folder or address and update the information on the folder or image.

In the exemplary embodiment of FIG. 8, if the touch input is terminated, the terminal 100 may add, insert, paste, or attach the selected object onto the execution screen of the application, or task where the touch input has been terminated. The terminal 100 may attach the selected image to a text message and/or insert the selected image to the message composition window. The terminal 100 may also enter a text composition mode and attach the selected image to the text composition window, to enable posting of the selected image on an SNS site.

The configuration of the terminal 100 is not limited to the above-described exemplary embodiments but may be modified, for example to perform various operations in response to the detection of the termination of the touch input. The skilled person will appreciate that many such modification will still fall within the scope of the present invention, as defined by the claims.

The touch and gesture input-based control method and terminal therefore according to embodiments of the present invention facilitate control of the operations of the terminal with the combination of the intuitive touch and gesture inputs made on the improved input interface.

It will be appreciated that embodiments of the present invention can be realized in the form of hardware, software or a combination of hardware and software. Any such software may be stored in the form of volatile or non-volatile storage, whether erasable or rewritable or not, including, for example, a storage device, ROM, RAM, memory chip/device/integrated circuit, and/or an optically or magnetically readable medium (e.g. CD, DVD, magnetic disk, and/or magnetic tape).

For example, the above-described methods according to embodiments of the present invention can be implemented in hardware, firmware or as software or computer code loaded into hardware, for example a processor or microprocessor and executed. The machine executable code may be stored on a recording medium, for example a CD ROM, a RAM, a floppy disk, a hard disk, or a magneto-optical disk, or may be computer code downloaded over a network, originally stored on a remote recording medium or a non-transitory machine readable medium, and be stored on a local recording non-transitory medium. The methods described herein may be rendered in such software that is stored on the recording medium using a general purpose computer, or a special processor or in programmable or dedicated hardware, for example an ASIC or FPGA.

As would be understood by a person of ordinary skill in the art, the computer, the processor, microprocessor controller or the programmable hardware may include memory components, e.g., RAM, ROM, Flash, thumbnail, etc. that may store or receive software or computer code that when accessed and executed by the computer, processor or hardware implement the processing methods described herein. In addition, it would be recognized that when a general purpose computer accesses code for implementing the processing described herein, the execution of the code transforms the general purpose computer into a special purpose computer for executing the processing described herein.

It will be appreciated that a storage devices and storage media are embodiments of machine-readable storage that are suitable for storing a program or programs comprising instructions that, when executed, implement embodiments of the present invention. Accordingly, embodiments provide a program comprising code for implementing an apparatus, system or method as claimed in any one of the claims of this specification, and a machine-readable storage storing such a program. Still further, such programs may be conveyed electronically via any medium such as a communication signal carried over a wired or wireless connection and embodiments suitably encompass the same.

Although exemplary embodiments of the present invention have been described in detail hereinabove with specific terminology, this is for the purpose of describing particular exemplary embodiments only and not intended to be limiting of the invention. While particular exemplary embodiments of the present invention have been illustrated and described, it would be obvious to those skilled in the art that various other changes and modifications can be made without departing from the spirit and scope of the invention.

## Claims

1. A method for controlling a terminal, the method comprising the steps of:
detecting a touch input on a touch screen display;
detecting a selection of at least one object of a plurality of objects corresponding to the touch input on the touchscreen display;
detecting a gesture input by a sensor in a state wherein the touch input of the at least one object is held on the touchscreen for at least an overlapping time period when the gesture is detected; and
performing switching of a display of one or more of the plurality of objects other than the at least one object which is held on the touchscreen display and corresponding to the gesture input in a state where the object is held at a position of the touch input.

2. The method of claim 1, wherein the at least one object held on the touchscreen display comprises at least one of an icon, a text, an image, a file, a folder, a content of a web browser, a web address, and a web link.

3. The method of claim 1 or 2, wherein the switching of objects being displayed while the at least one object is being held comprises at least one of page switching, folder switching, tab switching, application switching, and task switching.

4. The method of claim 1, 2 or 3, wherein performing switching comprises:
detecting the at least one object corresponds to the touch input; and
switching from among a display of plurality pages having the at least one object in the state of being held on the touchscreen display.

5. The method of any preceding claim, further comprising:
detecting by the touch sensor a release of the touch input of the selected object being held on the touchscreen display; and
performing by the control unit an operation corresponding to the release of the touch input for the selected object.

6. The method of claim 5, wherein the operation corresponding to the release of the touch input comprises performing at least one of arranging the object at a position corresponding to the release of the touch input, executing a link of the selected object in a tab of the web browser, and pasting the object on an execution screen of the application or task.

7. The method of claim 5 or 6, wherein the object comprises at least one image that is pasted on or attached to a text message or email message.

8. The method of claim 5, 6 or 7, wherein the object comprises at least one image that is pasted on or attached to a Social Networking application.

9. The method of any preceding claim, wherein the gesture includes a shape of a hand.

10. A terminal comprising:
an input unit for detecting touch and gesture inputs;
a control unit for detecting selection of at least one object of a plurality of objects corresponding to the touch input and performing switching of a display of one or more of the plurality of objects other than the at least one object, corresponding to the gesture input, in a state where the selected object is held at a position of the touch input of the input unit; and
a display unit for displaying a screen under the control of the control unit.

11. The terminal of claim 10, wherein the switching comprises at least one of page switching, folder switching, tab switching, application switching, and task switching.

12. The terminal of claim 10 or 11, wherein the input unit is configured to detect a release of the touch input, and the control unit is configured to perform at least one of arranging the selected object at a position corresponding to the release of the touch input, executing a link of the selected object in a tab of the web browser, and pasting the selected object on an execution screen of the application or task.

13. The terminal of claim 12, wherein the selected object comprises at least one image that is pasted on or attached to a text message or email message.

14. The method of claim 12 or 13, wherein the selected object comprises at least one image that is pasted on or attached to a Social Networking application.

15. The method of any of claims 10 to 14, wherein the gesture includes shape of a hand.
